# EUROPÄISCHE PATENTSCHRIFT

(11) **EP 1 254 752 B1**
(45) Veröffentlichungstag und Bekanntmachung des Hinweises auf die Patenterteilung: **25.04.2007**
(21) Anmeldenummer: 02008155.0
(22) Anmeldetag: 12.04.2002
(51) Int. Cl.: B29C 44/24, B29C 47/06, B29C 47/04

(54) **Mehrfarbige Schaumfolie und Verfahren für deren Herstellung**
Multicoloured foam sheet and method for its production
Feuille en mousse multicolorée et procédé pour sa fabrication

(30) Priorität: 03.05.2001 DE 10121518
(43) Veröffentlichungstag der Anmeldung: 06.11.2002
(73) Patentinhaber: Benecke-Kaliko Aktiengesellschaft, D-30419 Hannover (DE)
(72) Erfinder: Rost, Eberhard, Dr., 73431 Aalen (DE); Bühring, Jürgen, Dr., 30938 Burgwedel (DE)
(74) Vertreter: Finger, Karsten

(56) Entgegenhaltungen:
- DE-A- 19 530 757
- DE-A- 19 736 194
- US-A- 3 874 833
- US-A- 5 645 889
- DATABASE WPI Section Ch, Week 200010 Derwent Publications Ltd., London, GB; Class A32, AN 2000-110625 XP002242116 -& JP 11 348057 A (INOAC CORP KK), 21. Dezember 1999 (1999-12-21)

## Beschreibung

Die Erfindung betrifft eine zwei- oder mehrfarbige Schaumfolie sowie ein Verfahren zu deren Herstellung.

Schaumfolien sind im Stand der Technik seit langem bekannt. Diese müssen insbesondere den geltenden Anforderungen in der Automobilindustrie genügen, wo sie zur Bespannung von Fahrzeuginnenteilen, insbesondere Automobilinnenteilen, wie Seitentüren, Schaltkonsolen, Stirnpolstern, Säulen, Sitzrückenseiten, Himmelteilen, Armaturentafeln und dergleichen, dienen. Die bekannten Schaumschichten setzen sich im allgemeinen aus einem weichmacherhaltigen PVC-Schaum und einer kompakten Deck- bzw. Dekorschicht zusammen. Die von den Automobil- bzw. Fahrzeugherstellern an Schaumfolien gestellten Anforderungen stellen neben den ausreichenden mechanischen Festigkeitseigenschaften für die Gebrauchsbeanspruchung, wie Kratzen, Stoßen, Scheuern und dergleichen, darauf ab, daß dem fertig kaschierten Teil ein gewisser Polstereffekt und somit ein angenehmer Oberflächengriff verliehen wird. Insbesondere spielen hierbei auch ästhetische Erwägungen, d.h. das optische Erscheinungsbild im Fahrzeuginnenraum, eine große Rolle.

So ist bei Verkleidung von Instrumententafeln üblicherweise der obere Teil dunkel, d.h. schwarz, gestaltet, damit er sich nicht in der Windschutzscheibe spiegelt und so das Blickfeld des Fahrers nicht beeinträchtigt. Der untere Teil der Instrumententafel wird hingegen aus ästhetischen Gründen zumeist hell gestaltet. Demzufolge müssen zwei unterschiedlich gefärbte Bauteile gesondert verarbeitet und später zusammengebaut werden. Dies ist zeitaufwendig und verursacht zusätzliche Kosten. Ähnlich liegt die Situation für Innenverkleidungen von Türen, wonach ebenfalls beispielsweise ein dunkles Oberteil und ein helles Unterteil erwünscht sind.

Im Stand der Technik sind zweifarbige Schalttafel- oder Armaturenbrettfolien bekannt, wie beispielsweise beschrieben in der DE-A-195 30 757 oder der DE-A-197 36 194. Jedoch sind die bekannten Schaumfolien lediglich einfarbig. Zwei- oder mehrfarbige Schaumfolien, die den gewünschten Anforderungsprofilen genügen, sind auf dem Markt bislang nicht erhältlich. Dies hängt mit verschiedenen Faktoren zusammen. Wenn man auf eine bekannte Schaumfolie mit üblicher Dicke eine bekannte zwei- oder mehrfarbige Deckschicht auflaminieren würde, käme man zu einer Schaumfolie, welche nicht weiterverarbeitet werden könnte und zudem keiner der für Schaumfolien notwendigen Anforderungen genügen würde. Dies liegt einerseits daran, daß die gesamte Schaumfolie eine zu große Gesamtdicke aufweisen würde, wodurch beim Aufbringen der Schaumfolie auf Bauteile zur Innenverkleidung in Kraftfahrzeugen keine definierten Radien mehr erreicht werden könnten. Wenn man eine übliche zwei- oder mehrfarbige Deckfolie auf eine Schaumschicht auflaminieren würde, wäre zudem die Dicke der mehrfarbigen Deckfolie zu stark, so daß der von einer Schaumfolie erwünschte Softeffekt sowie die weiche Haptik zerstört werden würde. Mit anderen Worten verhindert die zu starke farbige Deckschicht die weichelastische Griffigkeit der Schaumfolie. Jedoch können aufgrund verfahrenstechnischer Grenzen nicht beliebig dünne mehrfarbige Folien hergestellt werden.

Ein weiterer Nachteil bekannter zwei- oder mehrfarbiger Folien besteht ferner darin, daß auf einen Träger beispielsweise zwei Folien unterschiedlicher Farben auflaminiert sind, wobei die beiden farbigen Folien an der Stoß- oder Nahtstelle aneinandergrenzen oder überlappend angeordnet sind. Wenn die Folien direkt nebeneinander liegen, entsteht eine zusätzliche Grenzfläche, welche beim Verformen der zwei- oder mehrfarbigen Folie eine Schwachstelle hinsichtlich der Stabilität darstellt, d.h. beispielsweise beim Tiefziehen bricht die Folie an dieser Nahtstelle leicht und reißt ganz durch. Bei der Variante, in der die beiden Farbfolien an der Nahtstelle überlappen, können zudem Haftprobleme auftreten, insbesondere wenn die untere Farbschicht eine zusätzliche Lackschicht trägt, so daß der überlappende Bereich bei Verformungen ebenfalls leicht aufplatzt bzw. einreißt.

Darüber hinaus müssen neben Kompatibilitätsproblemen der Farbschicht mit der Schaumschicht die hohen Anforderungen der Automobilindustrie berücksichtigt werden. Es ist daher notwendig, die Technologie einerseits einer zwei- oder mehrfarbigen Auflage und andererseits einer Schaumfolie derart aufeinander abzustimmen, daß gut verarbeitbare Schaumfolien mit den gewünschten Anforderungen resultieren.

Die US-A-5645889 zeigt eine mehrfarbige Schaumfolie gemäß dem Oberbegriff von Anspruch 1, die hergestellt wird, indem auf eine Schaumschicht ein flüssiges Plastisol mit einer ersten Farbe aufgetragen wird und ein flüssiges Plastisol mit einer zweiten Farbe punktuell im ersten Plastisol verteilt wird, um eine strukturierte flüssige Platisolmischung zu bilden, welche aushärten gelassen wird. Damit werden regellose Anordnungen und unscharfe Begrenzungen der Inseln mit der zweiten Farbe erzeugt.

Die schon erwähnte DE-A-19736194 zeigt eine mehrfarbige Kompaktfolie, die der in der Schaumfolie der Erfindung enthaltenen Kompaktfolie strukturell gleicht und im Prinzip auf dieselbe Weise hergestellt wird, aber nicht dazu bestimmt ist, zu einer Schaumfolie weiterverarbeitet zu werden.

Unter Berücksichtigung obigen Hintergrunds liegt der Erfindung demnach die Aufgabe zugrunde, zwei- oder mehrfarbige Schaumfolien bereitzustellen, welche die oben geschilderten Nachteile vermeiden, den Anforderungen der Automobilindustrie genügen und insbesondere zur Verkleidung von Instrumententafeln bzw. Türinnenauskleidungen herangezogen werden können. Ferner soll die Schaumfolie in wirtschaftlicher Weise ohne hohen Zeit- und Kostenaufwand in einfacher Weise herstellbar sein.

Erfindungsgemäß wird obige Aufgabe gelöst durch eine zwei- oder mehrfarbige Schaumfolie mit den in Anspruch 1 angegebenen Merkmalen.

Die Stärke der Unterschicht in Form der Schaumschicht beträgt bevorzugt etwa 0,7 bis 8,0 mm, insbesondere etwa 1,0 bis 4 mm.

Auf der Schaumschicht der erfindungsgemäßen zwei- oder mehrfarbigen Schaumfolie ist eine Deckschicht in Form einer zwei- oder mehrfarbigen Kompaktfolie ausgebildet. Die Kompaktfolie ist aus einem Träger und mindestens einer weiteren Schicht zusammengesetzt, wobei die weitere(n) Schicht(en) in einer entsprechenden Vertiefung des Trägers und mit diesem oberflächenbündig angeordnet ist (sind) und sowohl Träger als auch weitere Schichten jeweils einen Teil der Oberfläche der Folie bilden und verschieden gefärbt sind. Unter "Vertiefung" wird hier jegliche Abweichung des Dickenprofils des Trägers von der rechteckigen Form verstanden. Die Vertiefung kann beispielsweise die Form einer rechteck-, trapez- oder dreieckförmigen Aussparung haben, wobei auch jede andere geometrische Aussparung, die in einem Träger erzeugt werden kann, hier mitumfaßt ist. Die Vertiefung kann einen einzigen geschlossenen Bereich des Trägers ausmachen, sie kann aber auch mehrere voneinander getrennte Bereiche des Trägers betreffen.

Die Deckschicht in Form der Kompaktfolie besteht daher aus einem Verbund aus Träger und mindestens einer weiteren Schicht, wobei die weitere Schicht in eine Vertiefung des Trägers eingefügt ist und oberflächenbündig mit diesem vorliegt, so daß die Oberseite der Kompaktfolie teilweise vom Träger und teilweise von zumindest einer weiteren Schicht mit jeweils unterschiedlicher Farbgebung gebildet wird. Somit existieren in der zweifarbigen oder mehrfarbigen Kompaktfolie zwei oder mehrere Bereiche, wobei jeder Bereich eine andere Farbe aufweisen kann. Eine sichtbare Farbe stammt vom Träger, wobei die weitere Farbe oder weiteren Farben zu den weiteren Schichten gehören. Die erste Farbe kann beispielsweise einen dunklen Farbton, wie Schwarz oder Braun, aufweisen, während die zweite Farbe eine helle Färbung, wie Weiß oder Grau, haben kann. Demzufolge ist in der zwei- oder mehrfarbigen Kompaktfolie der Träger selbst sichtbar.

Die thermoplastischen Kunststoffe der zwei- oder mehrfarbigen Kompaktfolie unterliegen im Rahmen der Erfindung keinerlei Beschränkung. So sind beispielsweise Polyolefine, Vinylpolymere, Polyamide, Polyester, Polyacetate, Polycarbonate und zum Teil auch Polyurethane geeignet. Besonders bevorzugt sind Polyolefine. Vorzugsweise weist die Kompaktfolie eine Dicke von etwa 0,3 bis 0,7 mm auf.

Nach einer besonders bevorzugten Ausführungsform werden die Kunststoffe der Kompaktfolie aus Träger und zumindest einer weiteren Schicht derart ausgewählt, daß diese bei derselben Temperatur vergleichbare Viskositäten aufweisen. Hierdurch kann der Verbund aus Träger und Zusatzschicht stabiler gestaltet werden. Auch ist es möglich, daß Träger und weitere Schicht aus demselben thermoplastischen Kunststoff ausgewählt werden, was beispielsweise im Falle von Polyolefinen die Recyclingsfähigkeit drastisch erhöht.

Es ist erfindungsgemäß bevorzugt, daß die weitere Schicht eine Dicke von etwa 0,2 bis 1,0 mm, insbesondere etwa 0,3 bis 0,6 mm aufweist. Hierbei können die Dicke des Trägers und der weiteren Schicht entsprechend abgestimmt werden, um eine zwei- oder mehrfarbige Kompaktfolie gewünschter Dicke zu erhalten. Im Rahmen der Erfindung ist es möglich, sehr dünne zwei- oder mehrfarbige Kompaktfolien bereitzustellen, was mit dem eingangs beschriebenen Stand der Technik nicht möglich war. Dennoch stellen auch diese sehr dünnwandigen Kompaktfolien die erforderliche Festigkeit und anderen erwünschten mechanischen Eigenschaften zur Verfügung.

Hinsichtlich der einsetzbaren farbgebenden Pigmente der zwei- oder mehrfarbigen Kompaktfolie unterliegt die Erfindung ebenfalls keiner Einschränkung. So kann die Mehrfarbigkeit der erfindungsgemäßen Schaumfolie durch entsprechend unterschiedliche Farbpigmentierung oder Farbstoffzumischung in die Kunststoffschmelzen des Trägers und der weiteren Schicht oder Schichten erreicht werden. Die Mengen an zugesetztem Pigment bewegen sich dabei im üblichen Rahmen und sind dem Fachmann auf diesem Gebiet bekannt. Selbstverständlich können zusätzlich auch übliche Additive in den Schichten vorhanden sein.

Die zwei- oder mehrfarbige Kompaktfolie ist auf die Schaumfolie oder -schicht laminiert. Hierfür kann jedes dem Fachmann bekannte Verfahren eingesetzt werden.

Gegenstand der Erfindung ist auch ein Verfahren gemäß Anspruch 6 zur Herstellung der zwei- oder mehrfarbigen Schaumfolie auf Basis eines thermoplastischen Kunststoffs.

Das Verbinden mittels Klebemittel gemäß Anspruch 7 kann mit einem herkömmlichen Kleber erfolgen, aber auch durch eine klebende Folie, wie insbesondere eine Schmelzklebefolie. Eine Klebeschicht, die die Deckschicht mit der Schaumschicht flächig dauerhaft verbindet, mit thermoplastischem Charakter und geringer Stärke ist besonders bevorzugt. Es kann sich beispielsweise um eine ein- bzw. mehrschichtige Schmelzkleberfolie handeln. Diese sollte vorzugsweise nicht stärker als etwa 0,2 mm sein. Vorteilhafterweise kann auch eine ein- bzw. mehrschichtige Haftkleberschicht mit Lösemittel- bzw. Dispersionsklebstoff und/oder eine Kombination aus beidem, herangezogen werden.

Erfindungsgemäß wird dadurch, daß der Träger ebenfalls farbig ausgebildet ist, zumindest ein Extruder beim Verfahren eingespart, wodurch ein geringerer Aufwand und ein einfacher zu steuerndes Verfahren zur Herstellung der erfindungsgemäßen zwei- oder mehrfarbigen Schaumfolie erreicht wird. Aufgrund der erfindungsgemäßen Verfahrensführung wird bei der Herstellung der zwei- oder mehrfarbigen Kompaktfolie ein geringerer Ausschuß erhalten, was unter anderem an der geringeren Zahl an Grenzflächen gegenüber bekannten zwei- oder mehrfarbigen Folien liegt, die aufgrund der Nahtstelle, an der die farbigen Folien aneinanderstoßen oder überlappen, eine Art Sollbruchstelle bei Verformung oder Beanspruchung der Folie haben. Das Auftreten von Herstellungsfehlern wird hierdurch deutlich herabgesetzt. Die erhaltene Schaumfolie der Erfindung weist insgesamt eine verbesserte Beständigkeit beim Einsatz und der Weiterverarbeitung auf, da minimale Schicht- und Grenzflächen die Fehlerquellen reduzieren. Tatsächlich verhält sich die zwei- oder mehrfarbige Kompaktfolie auf der Schaumfolie wie eine herkömmliche homogene einfarbige Folie und besitzt daher auch deren Vorteile.

Erfindungsgemäß ist es möglich, den Träger und die weitere(n) Schicht(en) der zwei- oder mehrfarbigen Kompaktfolie gleichzeitig herzustellen und unter Zuführen der Schaumschicht unmittelbar zur erfindungsgemäßen Schaumfolie zu gelangen. Selbstverständlich können die einzelnen Schichten oder Folien auch gesondert erzeugt und als Halbfertigprodukte eingesetzt und dann zur Schaumfolie weiterverarbeitet werden.

Im Verfahren der Erfindung hat es sich als zweckmäßig erwiesen, mindestens eine der Folien oder Schichten vor dem Schritt des Zusammenfügens und Verbindens auf eine Temperatur im Bereich von etwa 50 bis 250°C vorzuwärmen. Die Temperatur kann in Abhängigkeit der Eigenschaften der zu behandelnden Folie, wie der Dicke und Art des thermoplastischen Kunststoffmaterials, ausgewählt werden. Hierzu kann beispielsweise ein IR-Strahlerfeld eingesetzt werden.

Die Folien und Schichten weisen die bereits beschriebenen Spezifikationen und Zusammensetzungen auf. Selbstverständlich können diesen auch übliche Zusätze einverleibt werden.

Nach einer besonders bevorzugten Ausführungsform erfolgt das Verbinden des Trägers mit der oder den anders gefärbten Schichten außerhalb der Düsen der Extruder. Mit anderen Worten ist es nicht unbedingt erforderlich, daß Träger und weitere Schichten koextrudiert werden, dies ist jedoch möglich.

Eine Vorrichtung zur Herstellung einer zwei- oder mehrfarbigen Schaumfolie kann Folgendes aufweisen eine erste Vorrichtung zum Erzeugen und/oder Zuführen einer Kunststoffschicht zum Ausbilden eines Trägers einer ersten Farbe mit mindestens einer Vertiefung;
eine zweite Vorrichtung zum Erzeugen und/oder Zuführen zumindest einer weiteren Kunststoffschicht zum Ausbilden einer oder mehrerer, anders als der Träger gefärbter weiterer Schichten, die in die Vertiefung(en) des Trägers oberflächenbündig einpassen;
eine dritte Vorrichtung zum Zuführen einer Schaumschicht;
ein Glättwerk zum oberflächenbündigen Verbinden und Glätten der entstandenen Oberfläche
(a) des Trägers, der weiteren Schicht(en) und der Schaumschicht unter Ausbilden einer zwei- oder mehrfarbigen Schaumfolie oder
(b) des Trägers und der weiteren Schicht(en) unter Ausbilden einer zwei- oder mehrfarbigen Kompaktfolie und
eine vierte Vorrichtung zum Verbinden der nach (b) erhaltenen zwei- oder mehrfarbigen Kompaktfolie mit der Schaumschicht unter Ausbilden einer zwei- oder mehrfarbigen Schaumfolie.

Demzufolge kann die Vorrichtung eine erste Vorrichtung, wie zum Beispiel einen Extruder, zum Erzeugen eines Trägers aufweisen sowie mindestens eine weitere Vorrichtung, wie zum Beispiel einen zweiten Extruder, zum Erzeugen der weiteren Schicht mit einer zweiten Farbe, die jeweils mit einem entsprechenden Formwerkzeug des Extruders ausgebildet werden. Auch können die erste und zweite Vorrichtung nur zur Zuführung von Träger und weiterer Schicht dienen, d.h. die vorgefertigten Schichten bzw. Folien werden eingesetzt. Die ausgeformte weitere Schicht wird dann in die Vertiefung des Trägers oberflächenbündig eingepaßt.

Der Träger und die weiteren Schichten werden durch Extrusion erzeugt. Dazu kann das Formwerkzeug des ersten Extruders eine schlitzartige Düse aufweisen, in die ein Vorsprung hineinsteht, dessen quer zur Strömungsrichtung der Kunststoffschmelze verlaufender Querschnitt dem Vertiefungsquerschnitt des erzeugenden Trägers entspricht. Durch entsprechende Einstellung des Vorsprungs kann die Form und Abmessung der Vertiefung im Träger entsprechend eingestellt werden. So kann der Vorsprung beispielsweise in Form einer relativ langgestreckten Lippe oder Welle vorliegen. Zur Regulierung von Dicke und Breite der Vertiefung kann die Lippe höhen- bzw. längenverstellbar eingerichtet sein. Auch können in der ersten Vorrichtung einstellbare Mittel, beispielsweise in Form von verstellbaren Lippen, vorgesehen sein, welche es ermöglichen, die Dicke des Trägers und somit die Gesamtdicke der Deckschicht zu variieren. Auch das Formwerkzeug des zweiten Extruders, beispielsweise in Form einer Düse, kann einstellbar ausgelegt sein, um die weitere(n) Schicht(en) für die gewählten Abmessungen der Vertiefung im Träger entsprechend zu dimensionieren.

Ferner kann eine dritte Vorrichtung zum Zuführen einer Schaumschicht vorhanden sein.

Darüber hinaus weist die Vorrichtung ein Glättwerk auf. Dieses dient nach der erfindungsgemäßen Ausführungsform (a) zum oberflächenbündigen Verbinden und Glätten der entstandenen Oberfläche des Trägers, zumindest einer weiteren Schicht und der Schaumschicht unter Ausbilden einer zwei- oder mehrfarbigen Schaumfolie. Alternativ dient das Glättwerk zum oberflächenbündigen Verbinden und Glätten der entstandenen Oberfläche des Trägers und der weiteren Schichten unter Ausbilden zunächst einer zwei- oder mehrfarbigen Kompaktfolie, welche im Anschluß in einer vierten Vorrichtung unter Zuführen der Schaumschicht zur erfindungsgemäßen zwei- oder mehrfarbigen Schaumfolie verarbeitet wird

Eine zusätzliche Vorrichtung kann zum Vorwärmen mindestens einer der Folien oder Schichten vor dem Glättwerk vorgesehen, sein wobei vor dem Schritt des Zusammenfügens und Verbindens auf eine Temperatur im Bereich von etwa 50 bis 250°C vorgewärmt wird.

Die durch die Erfindung bereitgestellten Vorteile sind vielschichtig. So zeichnet sich die erfindungsgemäße zwei- oder mehrfarbige Schaumfolie durch eine Vielzahl günstiger Eigenschaften aus. Sie ist ohne Probleme verarbeitbar, erfüllt die gewünschten Anforderungen und ist in einfacher Art und Weise wirtschaftlich herstellbar. Neben der außerordentlich guten Verarbeitbarkeit bietet die erfindungsgemäße Schaumfolie eine zwei- oder mehrfarbige Ausführung, welche bislang im Stand der Technik noch nicht zur Verfügung stand.

Bei Einsatz der erfindungsgemäßen Schaumfolie können zusätzliche Verarbeitungsschritte eingespart werden, da unterschiedliche gefärbte Bauteile nicht mehr gesondert verarbeitet und später zusammengebaut werden müssen. Hierdurch können zusätzliche Kosten vermieden werden.

Neben dem ästhetischen Erscheinungsbild und der ansprechenden Optik liefert die zwei- oder mehrfarbige Schaumfolie den erwünschten guten Polstereffekt sowie das gute Rückstellvermögen bekannter Schaumfolien und zeigt ein vorteilhaft niedriges Gewicht. Insgesamt erfüllt die zwei- oder mehrfarbige Schaumfolie in hohem Maße die Anforderungen der Automobilindustrie.

Vorteilhafte Ausführungsformen und Weiterbildungen der vorliegenden Erfindung ergeben sich aus der nachfolgenden Beschreibung der beiliegenden Zeichnungen. Es zeigen:
- Figur 1: eine schematische Seitenansicht einer Ausführungsform der Vorrichtung;
- Figur 2a: einen schematischen Querschnitt eines ersten Formwerkzeugs eines ersten Extruders der Vorrichtung gemäß Figur 1;
- Figur 2b: einen schematischen Querschnitt eines zweiten Formwerkzeugs eines zweiten Extruders der Vorrichtung gemäß Figur 1;
- Figur 3: eine Ausführungsform eines Schichtenaufbaus der erfindungsgemäßen zwei- oder mehrfarbigen Schaumfolie und
- Figur 4: eine weitere Ausführungsform eines Schichtenaufbaus der erfindungsgemäßen zwei- oder mehrfarbigen Schaumfolie.

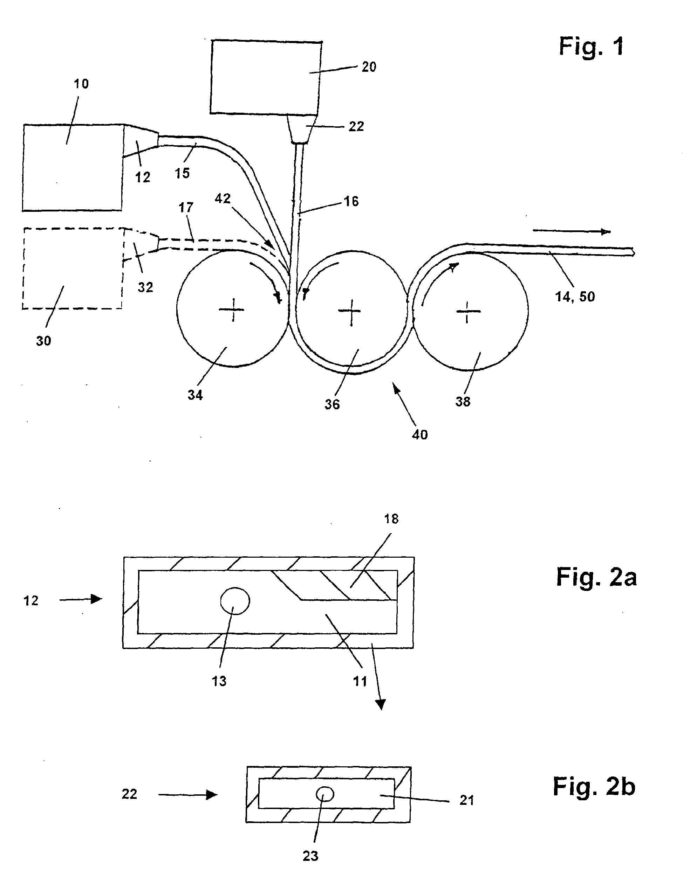

Figur 1 zeigt eine Ausführungsformen der Vorrichtung, die im wesentlichen einen ersten Extruder 10 mit einem ersten Formwerkzeug 12, einen zweiten Extruder 20 mit zweitem Formwerkzeug 22 und ein Glättwerk 40 umfaßt. Dieser Ausschnitt der Vorrichtung zeigt in schematischer Form eine Herstellungsvariante für die zwei- oder mehrfarbige Kompaktfolie, an die sich das Auflaminieren auf eine Schaumschicht (nicht gezeigt) anschließt.

In Figur 1 wird eine Kompaktfolie 14, zusammengesetzt aus Träger 15 und einer weiteren Schicht 16, erzeugt. Die Formmasse der ersten Kunststoffschmelze wird vom Extruder 10 über ein erstes Formwerkzeug 12 mit integrierter Ausgangsdüse bzw. Breitschlitzdüse (nicht gezeigt) als Träger 15 ausgestoßen. Der Träger 15 weist durch entsprechende Pigmentierung eine erste Farbe auf, die z.B. einen dunklen Farbton, wie Schwarz oder Braun, darstellen kann.

Der zweite Extruder 20 kann identisch wie Extruder 10 aufgebaut sein und stößt eine Kunststoffschmelze oder Formmasse durch ein zweites Formwerkzeug 22 mit Ausgangsdüse (nicht gezeigt) als weitere Schicht 16 aus, die eine zweite Farbe eines anderen Farbtons aufweist, der heller als die erste Farbe sein kann.

Das in Figur 2a im Querschnitt dargestellte erste Formwerkzeug 12 ist an den ersten Extruder 10 angeordnet und weist eine formgebende Kammer 11 auf, in welche die Kunststoffschmelze vom Extruder 10 über einen Kanal 13 eintritt. In die Kammer 11 ragt eine Lippe 18 als Vorsprung hinein, die einen rechtwinkligen Querschnitt hat und die Vertiefung 19 in der vom ersten Formwerkzeug 12 geformten Träger 15 ausformt. Die Kammer 11 des Formwerkzeugs 12 geht in eine Ausgangsdüse (nicht gezeigt) über.

Das in Figur 2b im Querschnitt gezeigte zweite Formwerkzeug 22 des zweiten Extruders 20 hat eine formgebende Kammer 21, durch die über einen Kanal 23 vom Extruder 20 die Kunststoffschmelze oder Formmasse eintritt. Die Kammer 21 geht in die Ausgangsdüse (nicht gezeigt) des Formwerkzeugs 22 über. Der rechtwinklige lichte Querschnitt der Kammer 21 des zweiten Formwerkzeugs 22 ist an den rechtwinkligen Querschnitt der in die Kammer 11 des ersten Formwerkzeugs 12 hineinragenden Lippe 18 angepaßt oder mit dieser deckungsgleich. Das zweite Formwerkzeug 22 erzeugt die weitere Schicht 16 mit rechteckigem schlitzartigem Profil.

Das Glättwerk 40 umfaßt drei nebeneinander angeordnete rotierende Walzen 34, 36 und 38. Der Rotationssinn der Walzen ist Figur 1 mit den entsprechenden Pfeilen zu entnehmen. In der gezeigten Ausführungsform wird die von Extruder 10 und dem Formwerkzeug 12 ausgestoßene Trägerschicht 15 zum Einzugsspalt 42 geführt. Die vom zweiten Extruder 20 und zweiten Formwerkzeug 22 ausgestoßene Schicht 16 wird von oben senkrecht zum Einzugsspalt 42 geführt. Das zweite Formwerkzeug 22 ist dabei derart angeordnet, daß die weitere Schicht lagerichtig und angepaßt zum Träger 15 in den Einzugsspalt 42 zwischen der ersten Walze 34 und der zweiten Walze 36 eintritt, wobei die weitere Schicht 16 genau deckungsgleich in die rechteckige Vertiefung 19 des Trägers 15 eintritt.

Die erste Walze 34 und die zweite Walze 36 befördern die zwei- oder mehrfarbige Kompaktfolie, zusammengesetzt aus Träger 15 und weiterer Schicht 16 weiter, bis der Folienverbund über die dritte Walze 38, die sich im Uhrzeigersinn dreht, das Glättwerk 40 wieder verläßt. Durch die im Glättwerk vorherrschende Temperatur im Bereich zwischen etwa 40 bis 90°C und dem von den Walzen ausgeübten Druck werden die teilweise noch erwärmten Folien zu einem festen Verbund verschweißt bzw. verklebt und gleichzeitig wird die Oberfläche der Kompaktfolie geglättet.

Demzufolge kann gleichzeitig mit Herstellung des Trägers 15 eine Schicht 16 mittels Extrusion und Formgebung derart erzeugt werden, daß die Schicht in die Vertiefung 19 des Trägers 15 deckungsgleich hineinpaßt. Die Vereinigung von Träger 15 und Schicht 16 wird im Bereich des Einzugsspalts 42 des Glättwerks 40 durchgeführt, wobei die Schicht 16 lagerichtig in die Vertiefung 19 des Trägers 15 eingebracht wird.

Nach der Extrudereinrichtung und vor dem Glättwerk kann eine Vorrichtung zum Vorwärmen der entsprechenden Folie oder Schicht vorgesehen werden, um diese in geeigneter Weise für den anschließenden Prozeß des Verbindens bzw. Verklebens vorzubereiten.

Nach Verlassen des Glättwerks kann die zwei- oder mehrfarbige Kompaktfolie gegebenenfalls nach Lackieren der Oberseite in einer weiteren Vorrichtung (nicht gezeigt) auf eine Schaumschicht 17 auflaminiert werden. Gleichzeitig kann die Oberseite der Kompaktfolie geprägt werden. Erfindungsgemäß kann die zwei- oder mehrfarbige Kompaktfolie auch mit einem Kleber oder einer Klebefolie mit der Schaumschicht 17 verbunden werden. Die Schaumschicht 17 kann dabei gleichzeitig mit der Kompaktfolie hergestellt oder auch als Halbfertigprodukt zugeführt werden.

Nach einer weiteren bevorzugten Ausführungsform kann eine weitere Vorrichtung 30 (gestrichelt dargestellt) zur Zuführung der Schaumschicht 17 vorgesehen sein. Die Schaumschicht 17 erstreckt sich zunächst in horizontaler Ebene und wird dann vor der ersten Walze 34 mitgenommen und auf deren Walzenumfang aufliegend dem Einzugsspalt 42 zugeführt. Hierdurch können der Träger 15 und die weitere Schicht 16 und der Schaum 17 im Einzugsspalt 42 des Glättwerks 40 aneinander gelegt werden und so unmittelbar die zwei- oder mehrfarbige Schaumfolie 50 gebildet werden. Selbstverständlich ist es auch möglich, die Schichten bzw. Folien bereits unmittelbar nach Formgebung vor Eintritt in den Einzugsspalt 42 miteinander zu Verbinden.

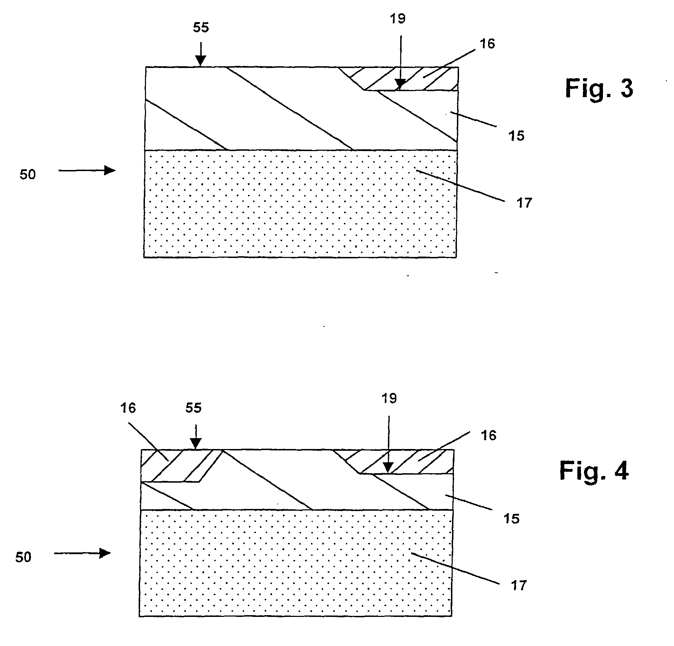

Figuren 3 und 4 zeigen verschiedene Ausführungsformen einer erfindungsgemäßen zwei- oder mehrfarbigen Schaumfolie 50 auf Basis von thermoplastischem Kunststoff, wobei der Träger 15 der Kompaktfolie 14 jeweils bis zur Oberseite 55 der Kompaktfolie 14 reicht und die weitere Schicht 16 in die Vertiefung 19 des Trägers 15 eingefügt ist und ebenfalls bis zur Oberseite 55 der Kompaktfolie 14 reicht. Unterhalb der zweifarbigen Kompaktfolie 14 in Form der Deckschicht ist eine Unterschicht in Form der Schaumschicht 17 vorgesehen.

Hierbei sind die weitere Schicht 16 und der Träger 15 an der Oberseite 55 der Kompaktfolie 14 oberflächenbündig angeordnet. Demzufolge erscheint die erfindungsgemäße Schaumfolie 50 mit dem Träger 15 einer ersten Farbe und der Schicht 16 einer zweiten Farbe dem Betrachter als zweifarbig.

## Patentansprüche

1. Zwei- oder mehrfarbige Schaumfolie (50) auf der Basis eines thermoplastischen Kunststoffs, umfassend mindestens eine Deckschicht und eine Unterschicht, wobei die Deckschicht in Form einer zwei- oder mehrfarbigen Kompaktfolie (14) aus einem Träger (15) und mindestens einer weiteren Schicht (16) vorliegt, und wobei jede weitere Schicht (16) in einer entsprechenden Vertiefung (19) des Trägers (15) und mit diesem oberflächenbündig angeordnet ist, wobei sowohl der Träger (15) als auch jede weitere Schicht (16) jeweils einen Teil der Oberfläche der Schaumfolie (50) bilden und verschieden gefärbt sind,
**dadurch gekennzeichnet, dass** die Unterschicht eine Schaumschicht (17) umfasst, wobei die Schaumschicht als Polyolefinschaum vorliegt und eine Dicke von 1,0 bis 4,0 mm aufweist, und dass die Kompaktfolie (14) eine konstante Dicke von 0,3 bis 1,5 mm aufweist, wobei jede weitere Schicht (16) eine Dicke von 0,3 bis 0,6 mm aufweist, und dass die Kompaktfolie (14) auf die Schaumschicht (17) laminiert ist.

2. Schaumfolie nach Anspruch 1, **dadurch gekennzeichnet, dass** der Polyolefinschaum aus Polyethylen und/oder Polypropylen zusammengesetzt ist.

3. Schaumfolie nach Anspruch 1 oder 2, **dadurch gekennzeichnet, dass** die konstante Dicke der Kompaktfolie (14) 0,3 bis 0,7 mm beträgt.

4. Schaumfolie nach einem der Ansprüche 1 bis 3, **dadurch gekennzeichnet, dass** jede weitere Schicht (16) dieselben Dimensionen wie die jeweilige entsprechende Vertiefung (19) im Träger (15) aufweist.

5. Schaumfolie nach Anspruch 4, **dadurch gekennzeichnet, dass** die entsprechende Vertiefung (19) im Träger (15) ein rechteckförmiges oder trapezförmiges oder dreieckförmiges Dickenprofil aufweist.

6. Verfahren zur Herstellung einer zwei- oder mehrfarbigen Schaumfolie (50) auf der Basis eines thermoplastischen Kunststoffs nach einem der Ansprüche 1 bis 5 mit den folgenden Verfahrensschritten:
(1) Herstellen oder Zuführen eines Trägers (15) einer ersten Farbe unter Ausbilden mindestens einer Vertiefung (19) im Dickenprofil des Trägers (15), zur oberflächenbündigen Aufnahme mindestens einer vom Träger (15) verschieden gefärbten und entsprechend der jeweiligen Vertiefung (19) dimensionierten jeweiligen weiteren Schicht (16);
(2) Herstellen oder Zuführen jeder weiteren Schicht (16) mit einer Dicke von 0,3 bis 0,6 mm;
(3) oberflächenbündiges Einpassen jeder weiteren Schicht (16) in die jeweilige entsprechende Vertiefung (19) in dem Träger (15) und Verbinden des Trägers (15) mit jeder weiteren Schicht (15) unter Wärme- und Druckeinwirkung bei gleichzeitigem Glätten der entstehenden Oberfläche unter Ausbilden einer Deckschicht in Form einer zwei- oder mehrfarbigen Kompaktfolie (14) mit einer Dicke von 0,3 bis 1,5 mm;
(4) Lackieren der Oberseite der Deckschicht;
(5) Herstellen oder Zuführen einer Unterschicht in Form einer Polyolefin-Schaumschicht (17) mit einer Dicke von 1,0 bis 4,0 mm;
(6) Verbinden des Trägers (15) der Deckschicht mit der Polyolefin-Schaumschicht (17) durch Laminieren unter der Wärme- und Druckeinwirkung unter gleichzeitigem Prägen der Decksicht entweder nach dem Ausbilden der Deckschicht oder während des Ausbildens der Deckschicht, unter Ausbilden der zwei- oder mehrfarbigen Schaumfolie (50).

7. Verfahren nach Anspruch 6, **dadurch gekennzeichnet, dass** das Laminieren der Deckschicht auf die Schaumschicht (17) unter Einsatz eines Klebemittels erfolgt.

8. Verfahren nach Anspruch 6 oder 7, **dadurch gekennzeichnet, dass** das Herstellen oder Zuführen des Trägers (15) und jeder weiteren Schicht (16) der Deckschicht und das Herstellen oder Zuführen der Polyolefin-Schaumschicht (17) gleichzeitig erfolgt, zum Ausbilden der zwei- oder mehrfarbigen Schaumfolie (50).

9. Verfahren nach mindestens einem der Ansprüche 6 bis 8, **dadurch gekennzeichnet, dass** jede weitere Schicht (16) der Deckschicht dieselben Dimensionen wie die entsprechende Vertiefung (19) im Träger (15) aufweist.

10. Verfahren nach Anspruch 9, **dadurch gekennzeichnet, dass** die entsprechende Vertiefung (19) im Träger (15) ein rechteckförmiges oder trapezförmiges oder dreieckförmiges Dickenprofil aufweist.

11. Verfahren nach mindestens einem der Ansprüche 6 bis 10, **dadurch gekennzeichnet, dass** die Polyolefin-Schaumschicht (17) einen Polyethylen- und/oder einen Polypropylenschaum umfasst.

12. Verfahren nach mindestens einem der Ansprüche 6 bis 11, **dadurch gekennzeichnet, dass** mindestens eine der von der zwei- oder mehrfarbigen Schaumfolie (50) umfassten Schichten (15, 16, 17) auf eine Temperatur von 50 bis 250°C vorgewärmt wird, zum Verbinden mit mindestens einer der übrigen, von der Schaumfolie umfassten Schichten.

13. Verfahren nach mindestens einem der Ansprüche 6 bis 12, **dadurch gekennzeichnet, dass** der Träger (15) und jede weitere Schicht (16) der Deckschicht durch Extrudieren erzeugt werden.

14. Verfahren nach Anspruch 13, **dadurch gekennzeichnet, dass** das Verbinden des Trägers (15) mit jeder weiteren Schicht (16) außerhalb der Düsen der Extruder erfolgt.

## Claims

1. Two-coloured or multicoloured foam sheet (50) based on a thermoplastic material, comprising at least an upper layer and a lower layer, the upper layer being in the form of a two-coloured or multicoloured compact film (14) comprising a carrier (15) and at least one further layer (16), and each further layer (16) being arranged in a corresponding depression (19) in the carrier (15) and being flush with the surface of the latter, both the carrier (15) and each further layer (16) respectively forming part of the surface of the foam sheet (50) and being differently coloured, **characterized in that** the lower layer comprises a foam layer (17), the foam layer taking the form of polyolefin foam and having a thickness of from 1.0 to 4.0 mm, and **in that** the compact film (14) has a constant thickness of from 0.3 to 1.5 mm, each further layer (16) having a thickness of from 0.3 to 0.6 mm, and **in that** the compact film (14) is laminated onto the foam layer (17).

2. Foam sheet according to Claim 1, **characterized in that** the polyolefin foam is made up of polyethylene and/or polypropylene.

3. Foam sheet according to Claim 1 or 2, **characterized in that** the constant thickness of the compact film (14) is 0.3 to 0.7 mm.

4. Foam sheet according to one of Claims 1 to 3, **characterized in that** each further layer (16) has the same dimensions as the respective corresponding depression (19) in the carrier (15).

5. Foam sheet according to Claim 4, **characterized in that** the corresponding depression (19) in the carrier (15) has a rectangular or trapezoidal or triangular thickness profile.

6. Method for producing a two-coloured or multicoloured foam sheet (50) based on a thermoplastic material according to one of Claims 1 to 5 with the following method steps:
(1) producing or supplying a carrier (15) of a first colour while forming at least one depression (19) in the thickness profile of the carrier (15), for receiving flush with the surface at least one respective further layer (16) coloured differently from the carrier (15) and dimensioned to correspond to the respective depression (19);
(2) producing or supplying each further layer (16) with a thickness of from 0.3 to 0.6 mm;
(3) fitting each further layer (16) into the respective corresponding depression (19) in the carrier (15) such that it is flush with its surface and bonding the carrier (15) to each further layer (15) under the effect of heat and pressure with simultaneous smoothing of the corresponding surface to form an upper layer in the form of a two-coloured or multicoloured compact film (14) with a thickness of from 0.3 to 1.5 mm;
(4) coating the upper side of the upper layer;
(5) producing or supplying a lower layer in the form of a polyolefin foam layer (17) with a thickness of from 1.0 to 4.0 mm;
(6) bonding the carrier (15) of the upper layer to the polyolefin foam layer (17) by laminating under the effect of heat and pressure while simultaneously embossing the upper layer, either after the forming of the upper layer or during the forming of the upper layer, to form the two-coloured or multicoloured foam sheet (50).

7. Method according to Claim 6, **characterized in that** the laminating of the upper layer onto the foam layer (17) is performed using an adhesive.

8. Method according to Claim 6 or 7, **characterized in that** the producing or supplying of the carrier (15) and each further layer (16) of the upper layer and the producing or supplying of the polyolefin foam layer (17) takes place simultaneously, to form the two-coloured or multicoloured foam sheet (50).

9. Method according to one of Claims 6 to 8, **characterized in that** each further layer (16) of the upper layer has the same dimensions as the corresponding depression (19) in the carrier (15).

10. Method according to Claim 9, **characterized in that** the corresponding depression (19) in the carrier (15) has a rectangular or trapezoidal or triangular thickness profile.

11. Method according to at least one of Claims 6 to 10, **characterized in that** the polyolefin foam layer (17) comprises a polyethylene foam and/or a polypropylene foam.

12. Method according to at least one of Claims 6 to 11, **characterized in that** at least one of the layers (15, 16, 17) comprised by the two-coloured or multicoloured foam sheet (50) is preheated to a temperature of from 50 to 250°C, for bonding with at least one of the other layers comprised by the foam sheet.

13. Method according to at least one of Claims 6 to 12, **characterized in that** the carrier (15) and each further layer (16) of the upper layer are produced by extrusion.

14. Method according to Claim 13, **characterized in that** the bonding of the carrier (15) to each further layer (16) is performed outside the dies of the extruders.

## Revendications

1. Feuille en mousse (50) bicolore ou multicolore à base d'un matériau synthétique thermoplastique, comprenant au moins une couche de recouvrement et une sous-couche, la couche de recouvrement se trouvant sous forme d'une feuille (14) compacte bicolore ou multicolore constituée par un support (15) et au moins une autre couche (16) et chaque autre couche (16) étant disposée dans un creux (19) correspondant du support (15) et avec une surface affleurante par rapport à celui-ci, le support (15) ainsi que chaque autre couche (16) formant à chaque fois une partie de la surface de la feuille en mousse (50) et présentant une couleur différente, **caractérisée en ce que** la sous-couche comprend une couche en mousse (17), la couche en mousse se trouvant sous forme de mouse en polyoléfine d'une épaisseur de 1,0 à 4,0 mm, et la feuille compacte (14) présente une épaisseur constante de 0,3 à 1,5 mm, chaque autre couche (16) présentant une épaisseur de 0,3 à 0,6 mm, et la feuille compacte (14) est laminée sur la couche en mousse (17).

2. Feuille en mousse selon la revendication 1, **caractérisée en ce que** la mousse en polyoléfine est constituée par du polyéthylène et/ou du polypropylène.

3. Feuille en mousse selon la revendication 1 ou 2, **caractérisée en ce que** l'épaisseur constante de la feuille compacte (14) est de 0,3 à 0,7 mm.

4. Feuille en mousse selon l'une quelconque des revendications 1 à 3, **caractérisée en ce que** chaque autre couche (16) présente les mêmes dimensions que chaque creux correspondant (19) dans le support (15).

5. Feuille en mousse selon la revendication 4, **caractérisée en ce que** le creux (19) correspondant dans le support (15) présente un profil d'épaisseur rectangulaire ou trapézoïdal ou triangulaire.

6. Procédé pour la fabrication d'une feuille en mousse (50) bicolore ou multicolore à base d'un matériau synthétique thermoplastique selon l'une quelconque des revendications 1 à 5 présentant les étapes de procédé suivantes :
(1) fabrication ou alimentation d'un support (15) présentant une première couleur en réalisant au moins un creux (19) dans le profil de l'épaisseur du support (15), destiné à recevoir avec une surface affleurante au moins une autre couche (16) présentant une autre couleur que le support (15) et chaque autre couche étant dimensionnée de manière correspondante à chaque creux (19) ;
(2) fabrication ou alimentation de chaque autre couche (16) présentant une épaisseur de 0,3 à 0,6 mm ;
(3) insertion affleurante en surface de chaque autre couche (16) dans le creux (19) à chaque fois correspondant dans le support (15) et assemblage du support (15) avec chaque autre couche (16) sous l'effet de la chaleur et de la pression avec un lissage simultané de la surface formée en formant une couche de recouvrement sous forme d'une feuille compacte (14) bicolore ou multicolore présentant une épaisseur de 0,3 à 1,5 mm ;
(4) laquage de la surface supérieure de la couche de recouvrement ;
(5) fabrication ou alimentation d'une sous-couche sous forme d'une couche en mousse de polyoléfine (17) présentant une épaisseur de 1,0 à 4,0 mm ;
(6) assemblage du support (15) de la couche de recouvrement avec la couche en mousse de polyoléfine (17) par laminage sous l'effet de la chaleur et de la pression avec un gaufrage simultané de la couche de recouvrement après la formation de la couche de recouvrement ou pendant la réalisation de la couche de recouvrement, avec formation de la feuille en mousse (50) bicolore ou multicolore.

7. Procédé selon la revendication 6, **caractérisé en ce que** le laminage de la couche de recouvrement sur la couche en mousse (17) est réalisé avec utilisation d'un adhésif.

8. Procédé selon la revendication 6 ou 7, **caractérisé en ce que** la fabrication ou l'alimentation du support (15) et de chaque autre couche (16) de la couche de recouvrement et la fabrication ou l'alimentation de la couche en mousse de polyoléfine (17) sont réalisées simultanément pour la réalisation de la feuille en mousse (50) bicolore ou multicolore.

9. Procédé selon au moins l'une quelconque des revendications 6 à 8, **caractérisé en ce que** chaque autre couche (16) de la couche de recouvrement présente les mêmes dimensions que le creux (19) correspondant dans le support (15).

10. Procédé selon la revendication 9, **caractérisé en ce que** le creux correspondant (19) dans le support (15) présente un profil d'épaisseur rectangulaire ou trapézoïdal ou triangulaire.

11. Procédé selon au moins l'une quelconque des revendications 6 à 10, **caractérisé en ce que** la couche en mousse (17) de polyoléfine comprend une mousse de polyéthylène et/ou une mousse de polypropylène.

12. Procédé selon au moins l'une quelconque des revendications 6 à 11, **caractérisé en ce qu'**au moins une des couches (15, 16, 17) faisant partie de la couche en mousse (50) bicolore ou multicolore est préchauffée à une température de 50 à 250°C, pour l'assemblage avec au moins une des autres couches faisant partie de la feuille en mousse.

13. Procédé selon au moins l'une quelconque des revendications 6 à 12, **caractérisé en ce que** le support (15) et chaque autre couche (16) de la couche de recouvrement sont produits par extrusion.

14. Procédé selon la revendication 13, **caractérisé en ce que** l'assemblage du support (15) avec chaque autre couche (16) est réalisé en dehors des filières de l'extrudeuse.
